# EUROPEAN PATENT APPLICATION

(11) **EP 4 521 268 A1**
(43) Date of publication of application: **12.03.2025**
(21) Application number: 24199027.4
(22) Date of filing: 06.09.2024
(51) Int. Cl.: G06F 16/93, G06F 16/958

(54) **CONTENT GENERATION IN AN ORGANISATION**

(30) Priority: 07.09.2023 GB 202313662
(71) Applicant: Contility Limited, Hamble Southampton SO31 4RF (GB)
(72) Inventor: TYLER-SMITH, Christopher John, Chilbolton, SO20 6BJ (GB); BULFIN, Nicholas, Hamble, SO31 4RF (GB)
(74) Representative: Valet Patent Services Limited

(57) **Abstract**

There is provided a computer-implemented method of content generation in an organisation with a plurality of members, the computer-implemented method comprising: hosting a web user interface portal on one or more servers, the web user interface portal being accessible by the plurality of members using respective user computer terminals; displaying a first instance of the web user interface portal on a first user computer terminal of a first member of the plurality of members within the organisation; receiving by the one or more servers a first piece of content from the first user computer terminal via the first instance of the web user interface portal; uploading, by the one or more servers, the first piece of content to a website for viewing; displaying a second instance of the web user interface portal on a second user computer terminal of a second member of the plurality of members within the organisation; receiving by the one or more servers a second piece of content from the second user computer terminal via the second instance of the web user interface portal; uploading, by the one or more servers, the second piece of content to a website for viewing.

## Description

### Technical Field

The present disclosure relates generally to methods and systems for content generation in an organisation with a plurality of members, and more particularly relates to methods and systems for content generation in an organisation with a plurality of members using a web user interface portal on one or more servers.

### Background

Many organisations produce content which may be uploaded to the internet, for example, on social media platforms, news websites, the organisation's website, etc. Organisations use this content for a variety of reasons, such as, education, publicity, increased visibility, etc. To this end, many organisations highly value uploading content and they actively encourage their members to create and upload content regularly.

However, due to the increasing volume of content and its increasing value, problems arise when attempting to create useful content for the organisation. Specifically, as the content typically originates from several members of the organisation (in larger organisations, this could be over a thousand people) the efficiency of creating content and the quality of the content can be hampered.

Accordingly, it is desirable to provide improved methods and systems for content generation in organisations. Furthermore, other desirable features and characteristics of the present disclosure will become apparent from the subsequent detailed description and the appended claims, taken in conjunction with the accompanying drawings and the foregoing technical field and background.

### Summary

In an aspect, there is provided a computer-implemented method of content generation in an organisation with a plurality of members, the computer-implemented method comprising: hosting a web user interface portal on one or more servers, the web user interface portal being accessible by the plurality of members using respective user computer terminals; displaying a first instance of the web user interface portal on a first user computer terminal of a first member of the plurality of members within the organisation; receiving by the one or more servers a first piece of content from the first user computer terminal via the first instance of the web user interface portal; uploading, by the one or more servers, the first piece of content to a website for viewing; displaying a second instance of the web user interface portal on a second user computer terminal of a second member of the plurality of members within the organisation; receiving by the one or more servers a second piece of content from the second user computer terminal via the second instance of the web user interface portal; uploading, by the one or more servers, the second piece of content to a website for viewing.

In certain embodiments, the one or more servers are configured to maintain a database of content information associated with each piece of content received from the plurality of members.

In certain embodiments, the content information includes any combination of: i) the content, such as text in the content, images in the content and/or videos in the content; ii) an author or authors of the content; iii) a status of the content, such as whether the content is in draft form, awaiting approval form, finalised form, uploaded form, the date the content was uploaded, the date on which the content is scheduled to be uploaded and/or deadlines associated with the content; iv) a location of the content, such as detail(s) of the website on which the content was uploaded, the name of the web site on which the content was uploaded, a link to the website on which the content was uploaded and/or a direct link to the uploaded content; and v) one or more tags associated with the content, such as category tags; vi) reach/value associated with the content; vii) comments associated with the content, such as comments added by any of the plurality of members via the web user interface portal and/or comments added by users accessing the website on which the content was uploaded; and viii) keywords associated with the content, optionally, a primary keyword associated with the content; ix) intent of content and/or research needed to create content; and x) the format of the content / the intended format of the content, such as a blog post, social media post, a video, etc.

In certain embodiments, the web user interface portal is configured to selectively display the content information to the plurality of members on their respective user computer terminals.

In certain embodiments, the web user interface portal is configured to selectively display the content information in an organised manner based on any one or more of the content information, such as a tree diagram and/or a nested list.

In certain embodiments, the web user interface portal is configured to selectively display the content / content information in an organised manner showing the relationship between the pieces of content. For example, the web user interface portal may be configured to selectively display the pieces of content and/or content information in a tree diagram and/or a nested listed where the pieces of content and/or content information are linked/grouped based on a common factor in the content information. In certain embodiments, the common factor may be any of the content disclosed herein, for example, keywords, authors, date, etc.

In certain embodiments, the web user interface portal is configured to selectively display the content information in an interactive manner such that the plurality of members, via their respective user computer terminals, may selectively view sub-sections of the content information, such as all of the content information associated with only one piece of content.

In certain embodiments, the one or more servers are configured to analyse the content information and determine one or more content actions, and, optionally, wherein the web user interface portal is configured to selectively display the one or more content actions.

In certain embodiments, the content information includes category tags, wherein the analysis of the content information includes an analysis of the category tags, and wherein the one or more content actions include an indication of one or more recommended category tags for new content generation.

In certain embodiments, the analysis of the content information includes an analysis of at least the category tags and an associated content value/reach.

In certain embodiments, the analysis of the content information includes an analysis of the relationships between pieces of content. In certain embodiments, the analysis of the relationships comprises determining which pieces of content are related, for example, by a common factor in the content information. In certain embodiments, the common factor may be any of the content disclosed herein, for example, keywords, authors, date, etc. In certain embodiments, the analysis of the relationships comprises determining trends in content information, for example, determining which keywords/topics are being commonly used.

In certain embodiments, a value/reach associated with a piece of content is determined by accessing a third-party keyword API.

In certain embodiments, the web user interface portal is configured to output suggested keywords based on topics received by a member via their respective user computer terminal.

In certain embodiments, the one or more servers is configured to produce at least part of a piece of content based on information, such as keywords, provided by a member via the web user interface portal, and optionally, wherein the one or more servers is configured to produce the at least part of a piece of content using generative AI.

In certain embodiments, content value/reach is determined. For example, in certain embodiments, value/reach associated with one or more keywords/topics is determined.

In certain embodiments, content value/reach of existing content associated with the organisation is determined. In certain embodiments, the value/reach is determined for a single piece of content. In certain embodiments, the value/reach is determined for a plurality of pieces of content which share a relationship with each other (for example, one branch of the tree diagram). In certain embodiments, the value/reach is determined for a plurality of pieces of content which share a relationship with each other based on a common factor in the content information, such as a keyword, author, date, etc.

In another aspect, there is provided a system for content generation in an organisation with a plurality of members, the system comprising one or more servers hosting a web user interface portal, the web user interface portal being accessible by the plurality of members using respective user computer terminals, wherein: the one or more servers are configured to receive a first piece of content from a first instance of the web user interface portal on a first user computer terminal of a first member of the plurality of members; the one or more servers are configured to upload the first piece of content to a website for viewing; the one or more servers are configured to receive a second piece of content from a second instance of the web user interface portal on a second user computer terminal of a second member of the plurality of members; and the one or more servers are configured to upload the second piece of content to a website for viewing.

In certain embodiments, the one or more servers are configured to maintain a database of content information associated with each piece of content received from the plurality of members.

In certain embodiments, the content information includes any combination of: i) the content, such as text in the content, images in the content and/or videos in the content; ii) an author or authors of the content; iii) a status of the content, such as whether the content is in draft form, awaiting approval form, finalised form, uploaded form, the date the content was uploaded, the date on which the content is scheduled to be uploaded and/or deadlines associated with the content; iv) a location of the content, such as detail(s) of the website on which the content was uploaded, the name of the web site on which the content was uploaded, a link to the website on which the content was uploaded and/or a direct link to the uploaded content; and v) one or more tags associated with the content, such as category tags; vi) reach/value associated with the content; vii) comments associated with the content, such as comments added by any of the plurality of members via the web user interface portal and/or comments added by users accessing the website on which the content was uploaded; and viii) keywords associated with the content, optionally, a primary keyword associated with the content; ix) intent of content and/or research needed to create content; and x) the format of the content / the intended format of the content, such as a blog post, social media post, a video, etc.

In certain embodiments, the web user interface portal is configured to selectively display the content information to the plurality of members on their respective user computer terminals.

In certain embodiments, the one or more servers are configured to analyse the content information and determine one or more content actions, and, optionally, wherein the web user interface portal is configured to selectively display the one or more content actions.

In certain embodiments, the content information includes category tags, wherein the analysis of the content information includes an analysis of the category tags, and wherein the one or more content actions include an indication of one or more recommended category tags for new content generation.

In certain embodiments, the analysis of the content information includes an analysis of at least the category tags and an associated content value/reach.

In certain embodiments, the web user interface portal is configured to output suggested keywords based on topics received by a member via their respective user computer terminal.

Any of the systems disclosed herein are configured to perform any of the methods disclosed herein.

### Brief Description of the Drawings

In order to better understand the subject matter that is disclosed herein and to exemplify how it may be carried out in practice, embodiments will now be described, by way of non-limiting example only, with reference to the accompanying drawings, in which:
Fig. 1 shows a representation of a system for content generation in an organisation;
Fig. 2 is a flow chart showing a method of content generation in an organisation;
Fig. 3 is a flow chart showing exemplary specific steps of the method of Fig. 2 relating to the users accessing a portal to create content;
Fig. 4 shows an exemplary screen of the portal for allowing users to identify and authenticate themselves;
Fig. 5A shows an exemplary dashboard screen of the portal;
Fig. 5B shows an exemplary detailed screen of the portal providing analytics information;
Fig. 5C shows an exemplary screen of the portal showing an overview of content associated with the organisation;
Fig. 5D shows an exemplary screen of the portal showing a detailed section of the overview shown in Fig. 5C; and
Fig. 5E shows an exemplary screen of the portal allowing users to edit the information shown in Figs. 5C and 5D.

### Detailed Description

In the following detailed description, numerous specific details are set forth in order to provide a thorough understanding of embodiments of the disclosure. However, it will be understood by those of ordinary skill in the art that the disclosure may be practiced without these specific details. In other instances, well-known methods, procedures, components, modules, units and/or circuits have not been described in detail so as not to obscure the disclosure.

The present disclosure may be computer implemented through any combination of static webpages, dynamic webpages and computer-executable programs of instructions, such as program modules, generally referred to as software applications or application programs executed by a server/computer. The website/software may include, for example, routines, programs, objects, components, and data structures that perform particular tasks or implement particular abstract data types. The website/software and its outputs/results may be transmitted over a variety of carrier media such as optical fiber, metallic wire, free space and/or through any of a variety of networks such as the Internet.

Moreover, those skilled in the art will appreciate that the disclosure may be practiced with a variety of computer-system configurations, including any combination of hand-held devices, multiprocessor systems, microprocessor-based or programmable-consume electronics, minicomputers, mainframe computers, and the like. Any number of computer-systems and computer networks are acceptable for use with the present disclosure. The disclosure may be practiced in distributed-computing environments where tasks are performed by remote-processing devices that are linked through a communications network. In a distributed-computing environment, program modules may be located in both local and remote computer-storage media including memory storage devices. The present disclosure may therefore, be implemented in connection with various hardware, software or a combination thereof, in a computer system or other processing system.

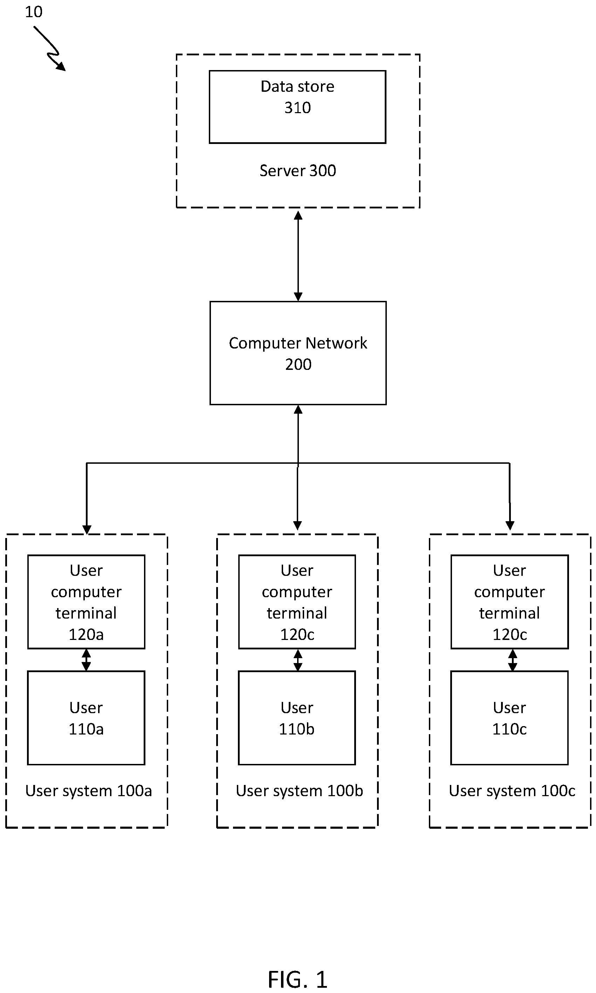

Fig. 1 shows a representation of a system 10 for content generation in an organisation. The system 10 comprises a plurality of user systems 100a, 100b, 100c which are in selective communication with a server 300. In the embodiment shown in Fig. 1, the user systems 100a, 100b, 100c communicate with the server 300 via a computer network 200. Fig. 1 shows only three user systems 100a, 100b, 100c, however, this is purely for illustrative purposes and any number of user systems 100a, 100b, 100c may be used with the present disclosure.

Each user system 100a, 100b, 100c comprises a user 110a, 110b, 110c and a respective user computer terminal 120a, 120b, 120c. The users 110a, 110b, 110c (also referred to as members) are associated with the organisation, for example, as owners, employees, consultants, temporary staff, etc. The organisation may be a company, business, educational institute, government institute, etc. and the organisation may optionally have at least one physical premises to which the users 1 10a, 110b, 110c may optionally have access.

The users 110a, 110b, 110c have access to at least their respective user computer terminals 120a, 120b, 120c. Accordingly, they may operate their respective user computer terminals 120a, 120b, 120c to access features of the user computer terminals 120a, 120b, 120c such as applications (apps) and/or the internet (e.g. via a web browser). In certain embodiments, for the users 110a, 110b, 110c to access their respective user computer terminals 120a, 120b, 120c, they must identify and authenticate themselves, for example, by any combination of entry of a PIN code/password and facial recognition.

As would be understood by the skilled person in the art, the user computer terminals 120a, 120b, 120c may be any computing device, for example, a laptop computer, a desktop computer, a mobile phone, a tablet, etc. The user computer terminals 120a, 120b, 120c may optionally be owned by the organisation.

The server 300 may be any server known to those skilled in the art. The server 300 may be connected to the user systems 100a, 100b, 100c (and, in particular, the user computer terminals 120a, 120b, 120c) via the computer network 200, for example, the internet. The server 300 comprises a data store 310. The data store 310 may take any form as known by those skilled in the art, for example, the data store 310 may be non-volatile storage such as one or more hard disk drives. In certain embodiments, the server 300 may be a plurality of servers. In certain embodiments, the server 300 may not be owned by the organisation, and instead may be a server also used by other organisations. In certain embodiments, the server 300 may be located on a premises of the organisation. In certain embodiments, the server 300 may not be located on a premises of the organisation.

As indicated by the arrows in Fig. 1, data may be transferred between the server 300 and each of the user computer terminals 120a, 120b, 120c in both directions. Specifically, the server 300 may transfer data to each of the user computer terminals 120a, 120b, 120c (i.e. the user computer terminals 120a, 120b, 120c may download data from the server 300) and each of the user computer terminals 120a, 120b, 120c may transfer data to the server 300 (i.e. the user computer terminals 120a, 120b, 120c may upload data to the server 300). In this way, the server 300 may be used to update information on the user computer terminals 120a, 120b, 120c (e.g. to display information on the user computer terminals 120a, 120b, 120c) and the user computer terminals 120a, 120b, 120c may be used to update information in the server (for example, data stored in the data 310).

The server 300 is configured to host a web user interface portal, described in further detail below. The web user interface portal may be accessible by each of the users 110a, 11 0b, 110c (or members) of the organisation (or at least a subset thereof), for example, by use of their respective user computer terminals 120a, 120b, 120c (or any other device able to access the web user interface portal). For example, each of the users 110a, 110b, 110c may use their respective user computer terminals 120a, 120b, 120c to open their web browser to the web user interface portal hosted by the server 300.

The web user interface portal may access data from the data store 310 and display such data. For example, as detailed below, the web user interface portal may display information relating to content associated with the organisation, for example, as a tree graph. This content information may be stored in a database on the data store 310 and maintained by the server and the web user interface portal.

The users 110a, 110b, 110c may access the web user interface portal at the same or different times, as would be understood by those skilled in the art. For example, a first instance of the web user interface portal may be displayed on a first user computer terminal (e.g. user computer terminal 120a), and (at the same time or before/after) a second instance of the web user interface portal may be displayed on a second user computer terminal (e.g. user computer terminal 120b). As described further below, the first and second users 110a, 110b may use their respective instances of the web user interface portal to draft a piece of content (such as a social media post), and the web user interface portal may then be used to upload the content to a website for viewing.

As detailed below, such a system 10 may provide for a centralised means for creating and uploading content originating from an organisation, meaning that the quality and effectiveness of the organisation's content-generating efforts are increased.

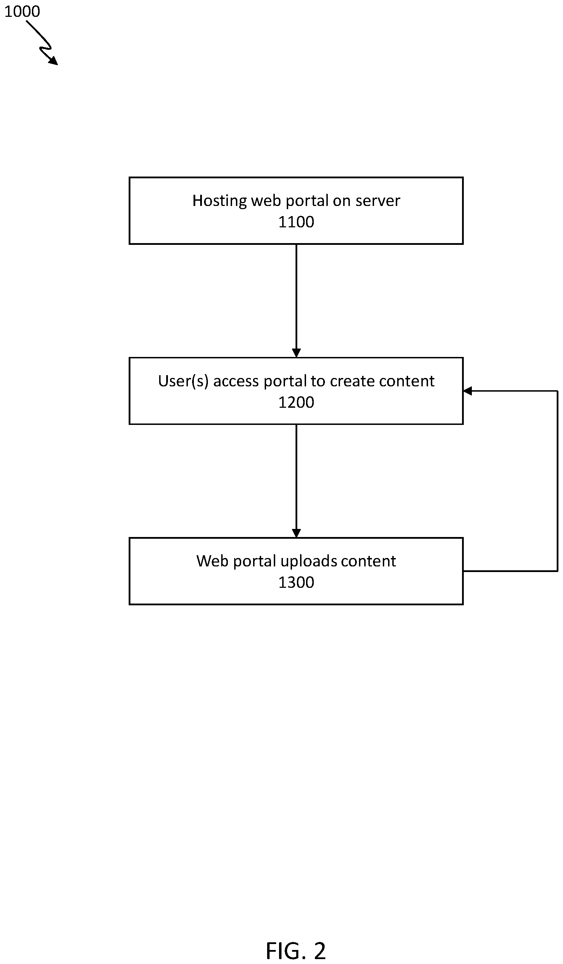

Fig. 2 is a flow chart showing a method 1000 of content generation in an organisation. The method shown in Fig. 2 may be implemented using all/part of the system 10 shown in Fig. 1.

At step 1100, the web user interface portal is hosted on the server 300. The web user interface portal is thereby accessible via a computer network 200 (e.g. the internet) by other computer devices, such as the user computer terminals 120a, 120b, 120c.

At step 1200, one or more members of the organisation access the web user interface portal either concurrently or at different times. The members of the organisation may use their respective user computer terminals 120a, 120b, 120c to access the web user interface portal hosted on the server 300. As detailed below, access to the web user interface portal may be limited.

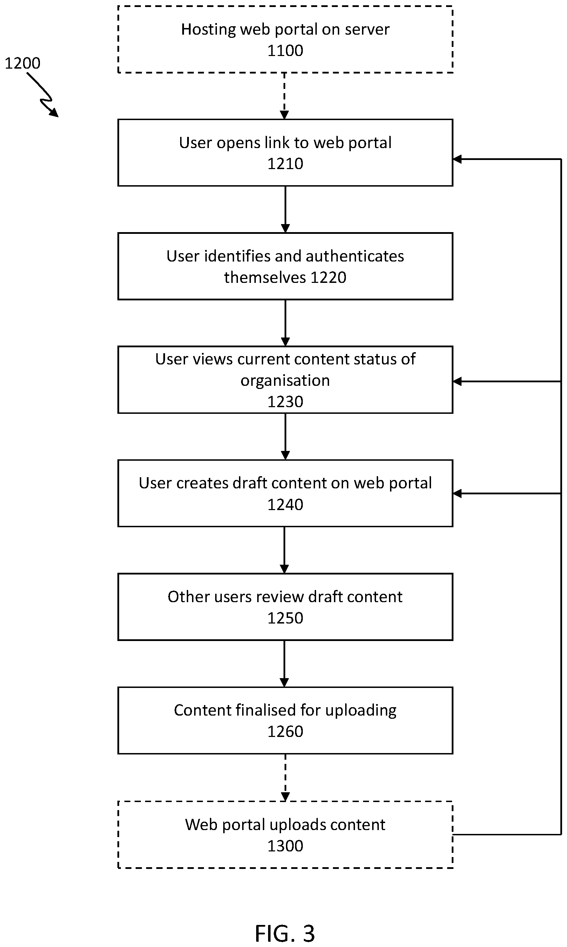

The members of the organisation may use their respective user computer terminals 120a, 120b, 120c to draft/create content on the web user interface portal. This is detailed below with respect to Fig. 3.

Once the content is drafted/created (and optionally approved), at step 1300, the web user interface portal is used to upload the content to a website. The website may or may not be external to the organisation (i.e. under ownership/control of the organisation). The website may be a social media website, a news website, a website of the organisation (internal or external), etc. At step 1300, the server 300 may update its content information stored in the data store 310 so as to reflect the status of the content that has been uploaded.

Turning to Fig. 3, further details of step 1200 of Fig. 2 are provided. Specifically, Fig. 3 shows exemplary steps for users to access the web user interface portal and create content.

At step 1210, the user 110a, 110b, 110c, using their respective user computer terminal 120a, 120b, 120c, opens a link (URL) to the location of the web user interface portal, e.g. using their web browser or an application (app).

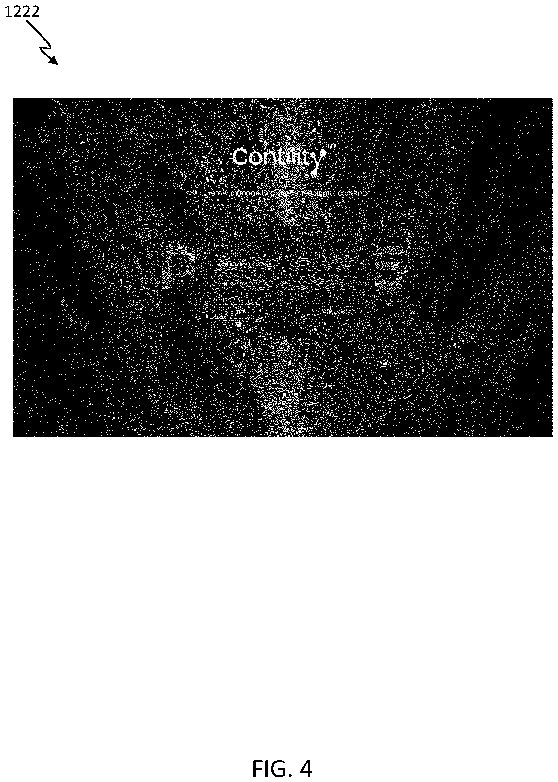

At step 1220, the user 110a, 110b, 110c identifies and authenticates themselves. This may be via a login screen (as detailed below with respect to Fig. 4) and may involve any authentication method known to those skilled in the art, for example, a two-factor authentication. Those users that cannot successfully authenticate themselves / have not been provided with access to the web user interface portal are prevented from proceeding (e.g. to steps 1230 onwards).

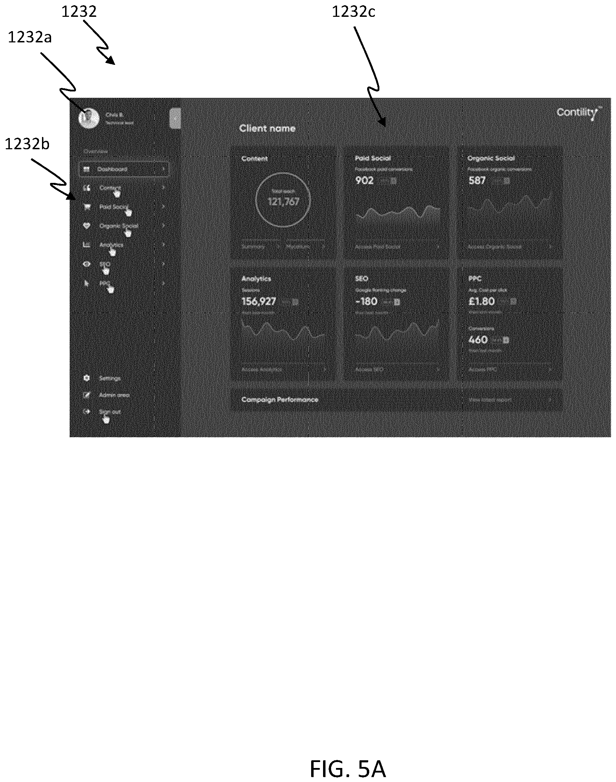

If the user successfully identifies and authenticates themselves, at step 1230, the user may optionally view information indicative of the status of content associated with the organisation. This information may be used to give the user an overview of the current state of content created by the organisation. Additionally, this information may be used to give the user a detailed view of the current state of content created by the organisation. Examples of the information that may be accessed is provide below, with respect to Figs. 5A to 5E. Step 1230 is purely optional, and the user may instead move immediately to step 1240 (described below) after completing step 1220. In certain embodiments, only certain members (e.g. admins) of the organisation have access to the information indicative of the status of content associated with the organisation (i.e. that shown in step 1230).

At step 1240, the user 110a, 110b, 110c may use the web user interface portal to draft/create a piece of content. The user 1 10a, 1 10b, 110c may optionally draft/create content based on the information viewed in step 1230. The web user interface portal may include several tools/features which may assist the user 110a, 110b, 110c in drafting/creating the content.

For example, the web user interface portal may provide information indicative of the reach and/or value of a particular keyword. Herein, as would be understood by the skilled person, the term 'reach' may refer to the potential or actual views/impressions a piece of content may achieve / achieves (e.g. potential or actual views/impressions per month). The potential reach may be the number of times (e.g. per month) that keyword is provided as a search term on a search engine. Herein, as would be understood by the skilled person, the term 'value' may refer to the potential or actual benefit provided by the keyword/content. For example, the value may take into account the reach and other attributes such as market size, trends, target demographic, matches, etc. to determine the value.

The user 110a, 110b, 110c may enter, in the web user interface portal, one or more keywords for a potential topic for the content to be drafted. The web user interface portal may provide an indication of the reach and value associated with each of the one or more keywords. Optionally, the web user interface portal may provide one or more similar alternative keywords with a higher reach and/or value for consideration by the user 110a, 110b, 110c.

The web user interface portal may use an external/third-party provider to determine the reach and/or value of a keyword, for example, Google^{®}'s keyword API.

In certain embodiments, the user 110a, 110b, 110c may select a piece of content (in draft, finalised or uploaded form) and the web user interface portal may be used to determine the reach and/or value of that piece of content. This may occur by automatically determining one or more keywords associated with the content and obtaining the reach and/or value associated with the one or more keywords.

In certain embodiments, the web user interface portal may be used to determine the reach and/or value of a particular area/factor. For example, the total reach and/or value associated with a topic, keyword, author, date, etc. may be determined. For example, the value/reach is determined for a plurality of pieces of content which share a relationship with each other (for example, one branch of a tree diagram). In certain embodiments, the value/reach is determined for a plurality of pieces of content which share a relationship with each other based on a common factor in the content information, such as a keyword, author, date, etc.

In certain embodiments, the user 110a, 110b, 110c may enter, into the web user interface portal, a topic for a piece of content, and the web user interface portal may provide one or more keywords associated with that topic. The one or more keywords may be based on the reach/value of the keyword, for example, prioritised at least partly on a higher reach/value. The web user interface portal may display a list of keywords associated with the topic, organised based on the reach/value of each keyword (for example, in a list starting with the highest reach/value keyword and descending to the lowest reach/value keyword). The user may consider these suggested keywords when drafting the intended content relating to that topic.

In certain embodiments, the user 110a, 110b, 110c may enter, into the web user interface portal, any combination of one or more keywords, a topic, a form (e.g. a article, blog, short-form post, etc.) for a piece of content, and the web user interface portal may automatically generate a piece of content based on the inputted information. The web user interface portal may general the content using any means known to those skilled in the art, such as generative Artificial Intelligence (AI).

Fig. 4 shows an exemplary page 1222 of the web user interface portal for allowing users 110a, 110b, 110c to identify and authenticate themselves during step 1220 of Fig. 3. As can be seen in Fig. 4, the page 1222 the user 110a, 110b, 110c to enter their email address and password, which is used to identify and authenticate the user 1 10a, 110b, 110c by means known to those skilled in the art.

Figs. 5A to 5E show various pages of the web user interface which may be accessed during step 1230 of Fig. 3. These pages may be used to view information relating to the current status of content associated with the organisation, and can be used to plan new content for the organisation.

Specifically, Fig. 5A shows a dashboard page 1232. The dashboard page 1232 may be shown immediately after the user 110a, 110b, 110c successfully logs in (i.e. after step 1220 and page 1222). The dashboard page 1232 provides an overview of certain information relating to the content associated with the organisation. For example, the dashboard page 1232 may comprise a number of widgets 1232c which provide headline information (such as statistics) associated with the content. The dashboard page 1232 typically provides high-level information and certain widgets / buttons may be clicked to access further details of the information.

In the example shown in Fig. 5A, on the left hand side of the dashboard page 1232, there is provided an profile indication 1232a of the user 110a, 110b, 110c that is accessing the web user interface portal. This area may have clickable buttons to allow the user 110a, 110b, 110c to access their profile and edit details, as would be understood by those skilled in the art.

In the example shown in Fig. 5A, on the left hand side of the dashboard page 1232, there is provided a navigation menu 1232b which may provide clickable buttons taking the user 110a, 110b, 110c to other areas of the web user interface portal. For example, the navigation menu 1232b may include links to pages which include detailed information on the content associated with the organisation.

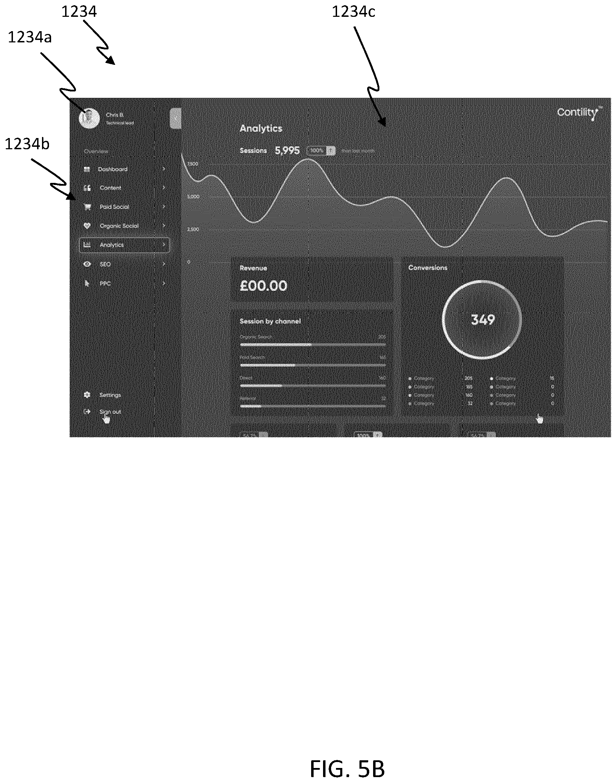

Fig. 5B shows one such exemplary detailed page 1234 of the web user interface portal providing analytics information 1234c. As with the above pages, detailed page 1234 include a profile indication 1234a and navigation menu 1234b.

The analytics information 1234c provided on detailed page 1234 may provide a number of different statistics, such as sessions, revenue and conversions. The skilled person would understand various other statistics that may be displayed.

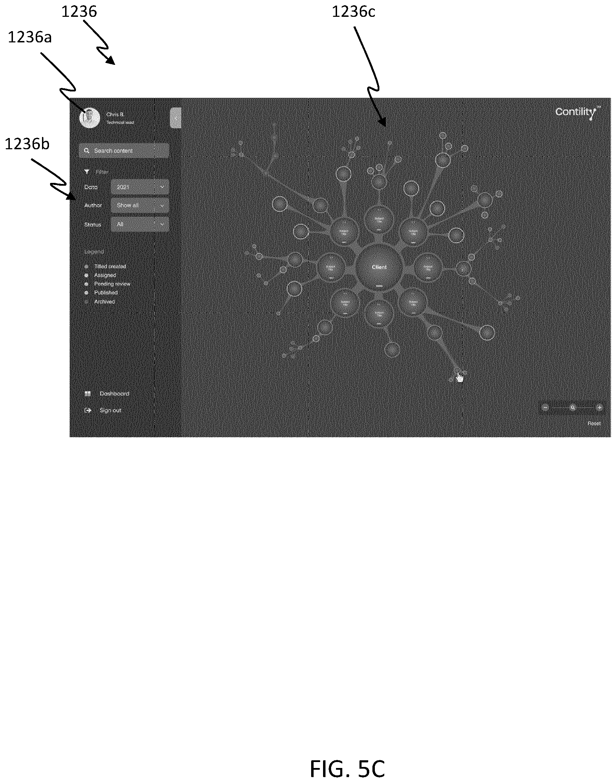

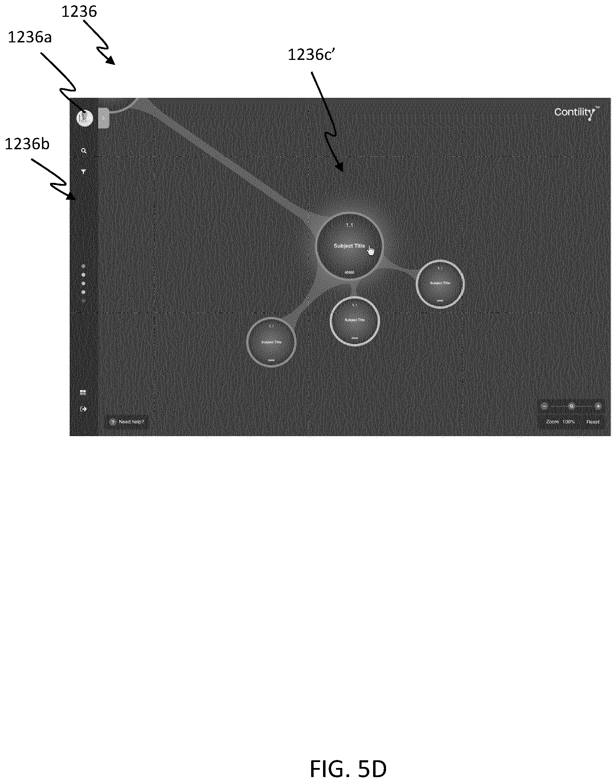

Fig. 5C and 5D show exemplary pages 1236 of the web user interface portal displaying an indication of the content associated with the organisation. As with the above pages, detailed page 1234 include a profile indication 1234a. The pages 1236 are configured to selectively display content information in an organised manner. Content information may be anything that relates to the content, for example:
i) the content, such as text in the content, images in the content and/or videos in the content;
ii) an author or authors of the content;
iii) a status of the content, such as whether the content is in draft form, awaiting approval form, finalised form, uploaded form, the date the content was uploaded, the date on which the content is scheduled to be uploaded and/or deadlines associated with the content;
iv) a location of the content, such as detail(s) of the website on which the content was uploaded, the name of the website on which the content was uploaded, a link to the website on which the content was uploaded and/or a direct link to the uploaded content; and
v) one or more tags associated with the content, such as category tags;
vi) reach/value associated with the content;
vii) comments associated with the content, such as comments added by any of the plurality of members via the web user interface portal and/or comments added by users accessing the website on which the content was uploaded; and
viii) keywords associated with the content, optionally, a primary keyword associated with the content;
ix) intent of content and/or research needed to create content; and
x) the format of the content / the intended format of the content, such as a blog post, social media post, a video, etc.

The pages 1236 display the all/some of the content information in an organised manner. In the example shown in Figs. 5C and 5D, the content information is grouped based on topic keywords, which may be structured with primary keywords, secondary keywords, tertiary keywords, etc. In the example shown in Fig. 5C and 5D, the information is organised as a tree graph 1236c, with the primary keywords forming the first level of division, secondary keywords forming the second level of division, the tertiary keywords forming the third level of division, and so on. Additionally/alternatively, the information may be organised in a list with headings, and several orders of sub-headings (e.g. a nested list). As would be understood by the skilled person, other ways of organising the content information can be used. In certain embodiments, the user 110a, 110b, 110c may toggle between different ways of arranging the information.

The tree graph shown in Figs. 5C and 5D is interactive such that the user 1 10a, 110b, 110c may click certain parts of the tree graph (such as nodes) to alter the view, display more information, etc. For example, Fig. 5C shows the entire tree graph, whereas a certain node of the tree graph has been clicked to display a detailed subsection of the tree graph in Fig. 5D.

The tree graph shows the relationship between the different pieces of content. For example, the web user interface portal may be configured to selectively display the pieces of content and/or content information in the tree diagram where the pieces of content and/or content information are linked/grouped based on a common factor in the content information. In certain embodiments, the common factor may be any of the content disclosed herein, for example, keywords, authors, date, etc.

The tree graph may selectively display indications of individual pieces of content (e.g. as an end branch of the tree graph) - this is shown in Fig. 5C. This may be achieved by selecting a zoomed view 1236'.

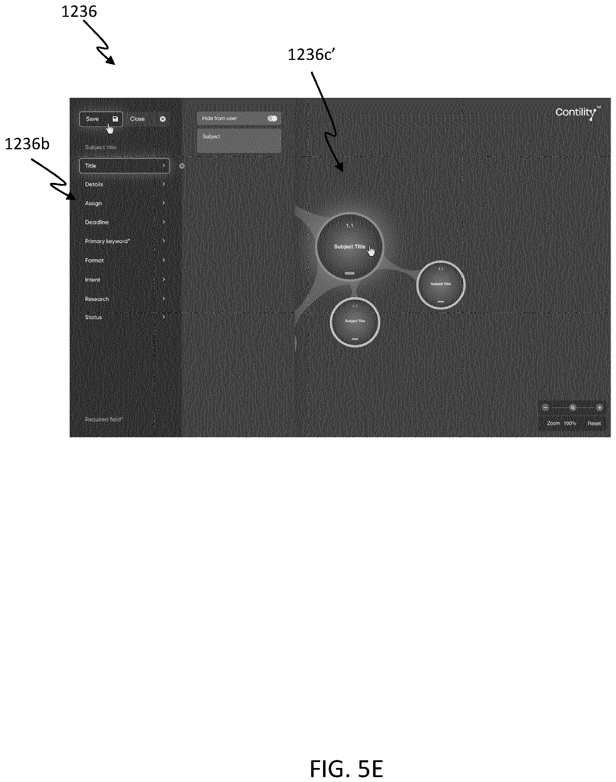

Fig. 5E shows a page 1236 where the user 110a, 110b, 110c may add/edit data in the tree graph. Specifically, page 1236 has an filter/edit panel 1236b which may be used to edit information in a node of the tree graph 1236c, or the manner in which the nodes are connected. The filter/edit panel 1236b may also be used to filter/rearrange the viewed information. When any content information is edited by an instance of the web user interface portal, the server 300 is configured to update the corresponding database in the data store 310 which stores the content information. In this manner, other instances of the web user interface portal (for example, on a different users computer device) may be updated to reflect the new content information. The updates may be performed in (near) real-time. In this manner, every instance of the web user interface portal may access the same content information and work can be carried out in a collaborative manner between different users 1 10a, 110b, 110c.

The web user interface portal may also be configured to analyse the content information stored in the database of the data store 310. Various analytics may be performed on the content information to provide useful insights to the users 1 10a, 110b, 110c.

For example, the content information may be assessed to provide content actions/recommendations. Content actions/recommendations may include any combination of: areas/topics/keywords to direct new content to, edits to existing content, proposals as to where to upload certain pieces of content (e.g. social media sites, news websites, etc.). Once any content actions/recommendations are determined, they may be selectively displayed on the web user interface portal.

In embodiments, the content information includes category tags / keywords associated with the content. In certain embodiments, the server 300 is configured to analyse these content tags / keywords and to determine one or more content tags / keywords to direct new pieces of content to. These may be displayed in the web user interface portal, for example, in the tree graph 1236c. In certain embodiments, the analysis takes into account the content tags / keywords and associated reach and/or value.

In certain embodiments, the analysis may assess the channels/sites to which content is uploaded to and provide actions/recommendations regarding which channels/sites new content should be uploaded to. For example, this could be to prioritise channels/sites which result in the greatest engagement, or those to which few content is uploaded to.

In certain embodiments, the analysis of the content information includes an analysis of the relationships between pieces of content. In certain embodiments, the analysis of the relationships comprises determining which pieces of content are related, for example, by a common factor in the content information. In certain embodiments, the common factor may be any of the content disclosed herein, for example, keywords, authors, date, etc. In certain embodiments, the analysis of the relationships comprises determining trends in content information, for example, determining which keywords/topics are being commonly used.

In certain embodiments, recommended category topics/keywords are determined by taking into account the defined tone of voice of existing content, brand information of existing content, regular topics of existing content, target audience of existing content to create recommendations around existing content that might explore other areas that are relevant. This may optionally be implemented using Jasper AI algorithm.

While at least one exemplary embodiment has been presented in the foregoing detailed description, it should be appreciated that a vast number of variations exist.

It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

## Claims

1. A computer-implemented method of content generation in an organisation with a plurality of members, the computer-implemented method comprising:
hosting a web user interface portal on one or more servers, the web user interface portal being accessible by the plurality of members using respective user computer terminals;
displaying a first instance of the web user interface portal on a first user computer terminal of a first member of the plurality of members within the organisation;
receiving by the one or more servers a first piece of content from the first user computer terminal via the first instance of the web user interface portal;
uploading, by the one or more servers, the first piece of content to a website for viewing;
displaying a second instance of the web user interface portal on a second user computer terminal of a second member of the plurality of members within the organisation;
receiving by the one or more servers a second piece of content from the second user computer terminal via the second instance of the web user interface portal;
uploading, by the one or more servers, the second piece of content to a website for viewing.

2. The computer-implemented method of Claim 1, wherein the one or more servers are configured to maintain a database of content information associated with each piece of content received from the plurality of members.

3. The computer-implemented method of Claim 2, wherein the content information includes any combination of:
i) the content, such as text in the content, images in the content and/or videos in the content;
ii) an author or authors of the content;
iii) a status of the content, such as whether the content is in draft form, awaiting approval form, finalised form, uploaded form, the date the content was uploaded, the date on which the content is scheduled to be uploaded and/or deadlines associated with the content;
iv) a location of the content, such as detail(s) of the website on which the content was uploaded, the name of the website on which the content was uploaded, a link to the website on which the content was uploaded and/or a direct link to the uploaded content; and
v) one or more tags associated with the content, such as category tags;
vi) reach/value associated with the content;
vii) comments associated with the content, such as comments added by any of the plurality of members via the web user interface portal and/or comments added by users accessing the website on which the content was uploaded; and
viii) keywords associated with the content, optionally, a primary keyword associated with the content;
ix) intent of content and/or research needed to create content; and
x) the format of the content / the intended format of the content, such as a blog post, social media post, a video, etc.

4. The computer-implemented method of Claim 2 or 3, wherein the web user interface portal is configured to selectively display the content information to the plurality of members on their respective user computer terminals.

5. The computer-implemented method of any one of Claims 2 to 4, wherein the web user interface portal is configured to selectively display the content information in an organised manner based on any one or more of the content information, such as a tree diagram and/or a nested list.

6. The computer-implemented method of any one of Claims 2 to 5, wherein the web user interface portal is configured to selectively display the content information in an interactive manner such that the plurality of members, via their respective user computer terminals, may selectively view sub-sections of the content information, such as all of the content information associated with only one piece of content.

7. The computer-implemented method of any one of Claims 2 to 6, wherein the one or more servers are configured to analyse the content information and determine one or more content actions, and, optionally, wherein the web user interface portal is configured to selectively display the one or more content actions, optionally wherein the content information includes category tags, wherein the analysis of the content information includes an analysis of the category tags, and wherein the one or more content actions include an indication of one or more recommended category tags for new content generation, yet more optionally wherein the analysis of the content information includes an analysis of at least the category tags and an associated content value/reach.

8. The computer-implemented method of any preceding claim, wherein a value/reach associated with a piece of content is determined by accessing a third-party keyword API.

9. The computer-implemented method of any preceding claim, wherein the web user interface portal is configured to output suggested keywords based on topics received by a member via their respective user computer terminal.

10. The computer-implemented method of any preceding claim, wherein the one or more servers is configured to produce at least part of a piece of content based on information, such as keywords, provided by a member via the web user interface portal, and optionally, wherein the one or more servers is configured to produce the at least part of a piece of content using generative AI.

11. A system for content generation in an organisation with a plurality of members, the system comprising one or more servers hosting a web user interface portal, the web user interface portal being accessible by the plurality of members using respective user computer terminals, wherein:
the one or more servers are configured to receive a first piece of content from a first instance of the web user interface portal on a first user computer terminal of a first member of the plurality of members;
the one or more servers are configured to upload the first piece of content to a website for viewing;
the one or more servers are configured to receive a second piece of content from a second instance of the web user interface portal on a second user computer terminal of a second member of the plurality of members; and
the one or more servers are configured to upload the second piece of content to a website for viewing.

12. The system of Claim 11, wherein the one or more servers are configured to maintain a database of content information associated with each piece of content received from the plurality of members, optionally wherein the content information includes any combination of:
i) the content, such as text in the content, images in the content and/or videos in the content;
ii) an author or authors of the content;
iii) a status of the content, such as whether the content is in draft form, awaiting approval form, finalised form, uploaded form, the date the content was uploaded, the date on which the content is scheduled to be uploaded and/or deadlines associated with the content;
iv) a location of the content, such as detail(s) of the website on which the content was uploaded, the name of the website on which the content was uploaded, a link to the website on which the content was uploaded and/or a direct link to the uploaded content; and
v) one or more tags associated with the content, such as category tags;
vi) reach/value associated with the content;
vii) comments associated with the content, such as comments added by any of the plurality of members via the web user interface portal and/or comments added by users accessing the website on which the content was uploaded; and
viii) keywords associated with the content, optionally, a primary keyword associated with the content;
ix) intent of content and/or research needed to create content; and
x) the format of the content / the intended format of the content, such as a blog post, social media post, a video, etc.

13. The system of Claim 12, wherein the web user interface portal is configured to selectively display the content information to the plurality of members on their respective user computer terminals; and/or.

14. The system of any one of Claims 11 to 13, wherein the one or more servers are configured to analyse the content information and determine one or more content actions, and, optionally, wherein the web user interface portal is configured to selectively display the one or more content actions, optionally wherein the content information includes category tags, wherein the analysis of the content information includes an analysis of the category tags, and wherein the one or more content actions include an indication of one or more recommended category tags for new content generation, wherein the analysis of the content information includes an analysis of at least the category tags and an associated content value/reach.

15. The system of any one of Claims 11 to 14, wherein the web user interface portal is configured to output suggested keywords based on topics received by a member via their respective user computer terminal.
